# EUROPÄISCHE PATENTSCHRIFT

(11) **EP 3 574 160 B1**
(45) Veröffentlichungstag und Bekanntmachung des Hinweises auf die Patenterteilung: **09.12.2020**
(21) Anmeldenummer: 18713133.9
(22) Anmeldetag: 27.02.2018
(51) Int. Cl.: E04C 2/04, E04B 1/14, E04B 5/04, E04B 5/48, E04C 2/06, E04C 5/06

(54) **PORENBETON-HYBRID-BAUELEMENT**
AERATED CONCRETE-HYBRID CONSTRUCTION ELEMENT
ÉLÉMENT DE CONSTRUCTION HYBRIDE EN BÉTON POREUX

(30) Priorität: 28.02.2017 DE 202017101111 U
(43) Veröffentlichungstag der Anmeldung: 04.12.2019
(73) Patentinhaber: CBS INTERNATIONAL GMBH, 78652 Deißlingen (DE)
(72) Erfinder: IMHOFF, Adolf, 58642 Iserlohn (DE)
(74) Vertreter: Haverkamp, Jens
(86) Internationale Anmeldenummer: PCT/EP2018/054732
(87) Internationale Veröffentlichungsnummer: WO 2018/158211

(56) Entgegenhaltungen:
- EP-A2- 0 122 316
- EP-A2- 2 050 548
- DE-A1- 3 522 382
- DE-A1- 19 743 413

## Beschreibung

Die Erfindung betrifft ein Porenbeton-Hybrid-Bauelement mit den Merkmalen des Oberbegriffs des Anspruchs 1.

Zur Errichtung von Gebäuden werden tafelförmige Wand- und/oder Deckenbauelemente als Fertigteile eingesetzt. Mehrere derartiger als Wand- oder Deckenbauelemente ausgeführte Fertigbauteile werden vor Ort auf der Baustelle zum Erstellen des Bauwerkes entsprechend zueinander angeordnet und miteinander verbunden werden. Diese Bauelemente tragen an ihren Verbindungsseiten komplementäre Profile, die nach Art eines Nut-Feder-Verbundes ausgeführt sein können. Mit solchen vorgefertigten Bauelementen lassen sich Gebäude in kurzer Zeit errichten. Aufgrund einer möglichen Serienfertigung derartiger Bauelemente lassen sich diese kostengünstig herstellen.

Bekannt ist ein solches Wand- oder Deckenbauelement aus EP 0 808 959 B1. Das aus diesem Stand der Technik bekannt gewordene Bauelement verfügt über zwei voneinander beabstandete Deckschichten. Die Deckschichten, die auch als Schalen angesprochen werden können, sind durch mehrere mit Abstand zueinander angeordnete Tragwerkprofile beabstandet. Die Tragwerkprofile weisen einen quer zur Ebene des Bauelementes verlaufenden Steg auf. Durch diesen ist der Abstand der Deckschichten voneinander definiert. An den Enden des Steges sind zwei in dieselbe Richtung abgewinkelte Tragwerkschenkel angeformt. Diese erstrecken sich parallel zu der flächigen Erstreckung der Deckschichten. Jeweils zwei mit ihren Rücken zueinander weisende und mit Abstand zueinander angeordnete Tragwerkprofile bilden einen Stützraum. In diesem werden vorspannbare Armierungseisen eingebracht. Der Stützraum wird anschließend mit Normalbeton verfüllt. Diese mit Normalbeton verfüllten Stützräume bilden Pfeiler aus, über die die wandseitigen statischen Lasten in das untere Widerlager abgeleitet werden. Jedes Bauelement weist mehrere, mit Abstand zueinander angeordnete derartige Stützpfeiler auf.

Der zwischen den auf diese Weise ausgebildeten Pfeilern vorhandene Hohlraum ist mit einem offenporigen Leichtbeton verfüllt. Bei diesem Bauelement dienen die Deckschichten auch zur Ausbildung einer Schalung, damit die aus dem offenporigen Leichtbeton bestehenden Kernschichten gegossen werden können. Zudem können die Deckschichten Dämmfunktionen übernehmen. Die statischen Eigenschaften dieses Bauelementes werden durch die pfeilerartigen Stützen definiert.

Hergestellt werden diese vorbekannten Bauelemente, indem zunächst die Tragwerkprofile an der Innenseite einer Deckschicht befestigt werden. In einem nachfolgenden Schritt werden die gegenüberliegenden Tragwerkschenkel an die andere Deckschicht angeschlossen. Dann ist die Schalung für den nachfolgenden Betonguss vorbereitet. Anschließend wird nach Einbringen der Armierungseisen in die Stützräume der Normalbeton in diese gegossen. In einem nachfolgenden Schritt wird der Leichtbeton zum Ausbilden der Kernschichten gegossen.

Aus EP 2 050 548 A2 ist ein Verfahren zur Herstellung eines Montagebauteils für selbsttragende Dachtafeln oder Wandplatten beschrieben. Diese Montagebauteile sind zweischalig aufgebaut und umfassen eine Porenbetongrundschicht mit einer Rohdichte zwischen 500 und 1.000 kg/m³ und eine Porenbetondämmschicht mit einer Rohdichte zwischen 60 und 200 kg/m³. Eingebracht in dieses Montagebauteil ist eine Armierung, welche mit ihren Enden in das durch die Porenbetondämmschicht gebildete schichtartige Wärmedämmelement hineinragt. Eingesetzt werden für die Bewehrung herkömmliche Gitterträger, die durch Querbewehrungselemente innerhalb des Wärmedämmelementes miteinander verbunden sind. Ein solches als Wandplatte hergestelltes Montagebauteil wird an einem zuvor errichteten Tragwerk befestigt.

DE 197 43 413 A1 offenbart ein Leichtbauelement als Dach- oder Wandplatte. Dieses Leichtbauelement verfügt über Tragelemente aus dünnwandigen, gekanteten Stahlprofilen und Bewährungselementen. Anstelle der Tragelemente können auch Gitterträger eingesetzt sein. Die Tragfähigkeit des Leichtbauelementes wird durch diese Profile erzeugt. Ausgefacht werden die Elemente mit einem Füllstoff aus recyceltem Styropor unter Sandzusatz mit hydraulischem Kalk oder Zement, mit recycelten Abfallstoffen einer Deponie als gemahlener oder geschredderter Müll unter Zusatz eines geeigneten Bindemittels oder mit Porenbeton. Während bei diesem Leichtbauelement die Tragfähigkeit durch die Tragelemente und die Bewährungselemente bereitgestellt wird, ist das für die Ausfachung verwendete Material für die Festigkeit verantwortlich. Befestigt werden diese Leichtbauelemente mit ihren Tragelementen an einer gebäudeseitigen, für die Lastableitung dienenden Tragekonstruktion. Damit dienen die Tragelemente dem Zweck, jedem Leichtbauelement seine erforderliche Tragfähigkeit zu verleihen, damit dieses, wie eine übliche Bewährung ohne zu brechen, auch in Schräglagen gehandhabt werden kann.

Auch wenn diese vorbekannten Bauelemente, eingesetzt als Wand- oder Deckenbauelemente vorteilhaft eingesetzt werden können, wäre es wünschenswert, ein Bauelement dieser Art zur Verfügung zu haben, welches nicht nur einfacher in seiner Herstellung, sondern auch hinsichtlich seiner Funktionalität und damit in seinen Anwendungsmöglichkeiten verbessert ist. Daher liegt der Erfindung die Aufgabe zugrunde, ein solches Bauelement vorzuschlagen.

Gelöst wird diese Aufgabe erfindungsgemäß durch ein Porenbeton-Hybrid-Bauelement mit den Merkmalen des Anspruchs 1.

Unter dem im Rahmen dieser Ausführungen benutzten Begriff "Porenbeton" ist solcher Beton zu verstehen, der aufgrund seiner Poren eine gegenüber Normalbeton geringere Rohdichte aufweist. Die Poren können in einem solchen Porenbeton durch Einsatz eines Treibmittels eingebracht werden, sodass es sich bei diesem Porenbeton um einen aufgeschäumten Beton handelt. Durchaus möglich ist auch der Einsatz eines offenporigen bzw. haufwerkporigen Porenbetons. Bei beiden Ausgestaltungen handelt es sich um Leichtbetone mit einer Rohdichte von typischerweise weniger als 1.600 kg/m³.

Bei diesem Bauelement sind die Tragwerkschenkel in eine Porenbetonschicht eingegossen. Bei einem solchen Porenbeton handelt es sich um einen Leichtbeton. Die Tragwerkprofile sind durch die Porenbetonschale miteinander verbunden. In ein und derselben die Porenbetonschalen umfassenden Porenbetonschicht befinden sich somit mehrere mit Abstand zueinander angeordnete Tragwerkprofile. Bei diesem Bauelement typischerweise ist vorgesehen, dass zumindest die an der einen Seite des Steges der Tragwerkprofile angeordneten Tragwerkschenkel insgesamt in die durchgehende Porenbetonschicht eingegossen sind, während die anderen Tragwerkschenkel mit ihrer nach außen weisenden Oberfläche freiliegen können und damit nur zum Teil in die Porenbetonschicht eingegossen sind. Bei anderen Anwendungsfällen wird man das Bauelement so auslegen, dass beide Tragwerkschenkel der am Aufbau des Bauelementes beteiligten Tragwerkprofile in jeweils eine eigene Porenbetonschale vollständig eingegossen sind. Das Eingießen der Tragwerkschenkel in eine Porenbetonschicht erleichtert die Herstellung, da gegenüber dem aus EP 0 808 959 B1 bekanntgewordenen Bauelement nicht noch zusätzliche Deckschichten für die Herstellung benötigt werden. Vorteilhaft ist zudem, dass durch das Eingießen der Tragwerkschenkel in eine Porenbetonschicht die Verbundwirkung zwischen den Tragwerkprofilen und der Porenbetonschicht durch die flächige Anbindung des noch nicht ausgehärteten Porenbetons an den eingegossenen Tragwerkprofilteilen deutlich verbessert ist. Dieser Verbund kann durch Verklammerungsnuten oder andere einer Verklammerung der Tragwerkprofile mit der Porenbetonschicht dienende Mittel noch verbessert werden. Durch das Eingießen zumindest der Tragwerkschenkel des Tragwerkprofiles mit einem Abschnitt des angrenzenden Steges in die Porenbetonschicht sind bei diesem Bauelement sowohl die Tragwerkprofile als auch die Betonschicht in ihrer Zusammenwirkung miteinander statisch definiert. D. h.: Beide Elemente - Tragwerkprofile und Betonschicht - sind für die Statik des Bauelementes bzw. die über das Bauelement aufzunehmenden bzw. abzuleitenden Lasten verantwortlich. Daher kann ein solches Bauelement aufgrund dieser Funktionalität auch als Hybridbauelement angesprochen werden.

Von Vorteil bei einem solchen Bauelement ist aufgrund seines Hybridcharakters bezüglich der statischen Definition, dass, um den statischen Anforderungen zu genügen, für dessen Herstellung kein Normalbeton benötigt wird, der bei Bauelementen aus dem Stand der Technik zum Erzielen der benötigten statischen Eigenschaften zumindest in Form von Stützen eingesetzt werden muss. Das Bauelement kann somit insgesamt mit einem geringeren Gewicht hergestellt werden. Um den statischen Anforderungen als Wand- oder Deckenbauelement zu genügen, wird es als ausreichend angesehen, wenn das Bauelement eine durchschnittliche Rohdichte seiner Porenbetonschicht von 400 bis 1200 kg/m³ aufweist. Normalbeton hat hingegen eine Rohdichte von etwa 2500 kg/m³.

Die Vorteile in der Herstellung eines solchen Bauelementes liegen auch darin begründet, dass die Tragwerkprofile in die Porenbetonschicht eingegossen werden. Der bzw. die Befestigungsschritte zum Anschließen der Tragwerkprofile an die Deckschichten gemäß EP 0 808 959 B1 entfallen daher.

Das Eingießen der Tragwerkschenkel in eine Porenbetonschicht eröffnet die Möglichkeiten, dass die Porenbetonschicht aus mehreren, beispielsweise zwei, Porenbetonschalen aufgebaut sein kann. Im letzteren Fall ist jeder Tragwerkschenkel in eine eigene Porenbetonschale eingegossen. Bei einem Bauelement, bei dem die Tragwerkschenkel der Tragwerkprofile in jeweils eine Porenbetonschale eingegossen sind, können die beiden Porenbetonschalen unterschiedliche Rohdichten aufweisen. Dabei ist eine Porenbetonschale höherer Rohdichte vorgesehen, während die andere Porenbetonschale eine geringere Rohdichte aufweist. Der Porenbetonschale mit geringerer Rohdichte käme bei einer solchen Ausgestaltung des Bauelementes vornehmlich eine Dämmungsfunktionalität zu, insbesondere auch in Bezug auf eine Wärmedämmung, während die Porenbetonschale mit höherer Rohdichte einen größeren Anteil der statischen Lastaufnahmefunktionalität übernimmt. Bei diesem Bauelement mit zwei Porenbetonschalen können diese flächig aneinandergrenzend gegossen sein. Aufgrund der unterschiedlichen Rohdichte kann ohne Weiteres die Porenbetonschale mit der leichteren Rohdichte frisch auf frisch auf die mit der höheren Rohdichte gegossene aufgebracht werden, und zwar unmittelbar nachdem diese gegossen ist und noch nicht abgebunden hat. Dann binden die beiden gegossenen Porenbetonschalen gleichzeitig ab mit dem Ergebnis, dass diese auch in ihrem Grenzbereich miteinander abbinden und dadurch der Verbund zwischen den beiden Porenbetonschalen besonders ausgeprägt und in dem abgebundenen Bauteil sodann keine Grenzfläche, sondern nur eine Änderung in der Dichte im Übergang von der einen Porenbetonschale zu der anderen zu erkennen ist. Bei dem Bauelement mit zwei Porenbetonschalen können diese, wenn gewünscht, auch voneinander beabstandet sein, beispielsweise dann, wenn zwischen den beiden Porenbetonschalen eine Dämmschicht angeordnet sein soll. Typischerweise wird man in einem solchen Fall eine Dämmschicht einsetzen, die hinreichend fest ist, wobei eine Trittfestigkeit als ausreichend angesehen wird, damit auf dieser eine der beiden Porenbetonschalen auf diese gegossen werden kann, ohne dieses Material, jedenfalls nicht nennenswert zusammenzudrücken.

Zur Steigerung der Verklammerung der Tragwerkschenkel in der jeweiligen Porenbetonschale können ein oder mehrere, in Richtung zum anderen Tragwerkschenkel hin vertiefte und der Längserstreckung des Tragwerkprofils folgende Verklammerungsnuten vorgesehen sein. Diese sind gemäß einer Ausgestaltung beidseitig hinterschnitten, beispielsweise nach Art eines Schwalbenschwanzes. Durch derartige Aus- bzw. Einprägungen wird zum einen die Formstabilität der Tragwerkschenkel erhöht. Diese zur Außenseite offene Verklammerungsnuten können zum anderen auch benutzt werden, um beispielsweise Halterungen darin einzusetzen, etwa Halter für Rohre, etwa eines Heizungssystems. Die Halter und die daran angeschlossenen Gegenstände, beispielsweise die Rohre, werden dann zusammen mit diesem Tragwerkschenkel in die Betonschale eingegossen. Auch der Steg kann durch solche, seine Steifigkeit erhöhende Aus- oder Einprägungen verstärkt sein. In einer Ausgestaltung ist vorgesehen, dass der Steg durch eine seiner Längserstreckung folgende Verklammerungsnut verstärkt ist, die ausgehend von seinem Rücken in Richtung der Abwinklung der Tragwerkschenkel ausgeführt ist. Auch eine solche Verklammerungsnut kann beidseitig hinterschnitten sein. Vorteilhaft ist eine Ausgestaltung, bei der die Breite der Verklammerungsnut des Steges soweit reicht, dass deren randliche Begrenzung in eine Porenbetonschale hineinreicht und somit ebenfalls mit eingegossen ist. Dieses wirkt sich positiv auf den Verklammerungsverbund zwischen dem Tragwerkprofil und der oder den Porenbetonschalen aus. Zusätzlich können der Steg und/oder die Tragwerkschenkel in Querrichtung zur Längserstreckung des Tragwerkprofils wirkende Verklammerungsstrukturen aufweisen.

Innerhalb des Bauelementes sind die Tragwerkprofile mit Abstand zueinander angeordnet. Dabei können die Tragwerkprofile gleichsinnig zueinander angeordnet sein, das heißt: Die Tragwerkschenkel weisen sämtlich in dieselbe Richtung. Ebenfalls besteht die Möglichkeit, die Tragwerkprofile bezüglich der Richtung der Abkantung der Tragwerkschenkel wechselweise anzuordnen. Die Tragwerkprofile können zur Handhabung eines solchen Bauelementes auch dergestalt zueinander angeordnet sein, dass zwei Tragwerkprofile, mit ihrem Rücken zueinander weisend angeordnet, durch einen Bolzen miteinander verbunden sind. Die beiden Tragwerkprofile sind mit einem geringeren Abstand zueinander angeordnet als zu den benachbarten weiteren Tragwerkprofilen. Dieser Bolzen ist in einem randabschlussnahen Endabschnitt des Bauelementes angeordnet und von außen zugänglich. Um den Bolzen kann sodann eine Ringschlaufe zum Heben des Bauelementes gelegt werden. Typischerweise verfügt ein solches Bauelement über ein oder zwei derartiger Hebemittelanschlusspunkte. Auch unabhängig davon, ob Anschlusspunkte auf diese Weise bereitgestellt werden, können die Tragwerkprofile in der vorbeschriebenen Art und Weise paarweise gruppiert in dem Bauelement angeordnet sein.

Ein solches Bauelement kann als Wandbauelement oder auch als Deckenbauelement verwendet werden. Je nach der vorgesehenen Ausgestaltung des Bauelementes können die typischerweise mehreren Porenbetonschalen hinsichtlich ihrer Rohdichte ausgebildet sein. Bei einer Konzeption als Deckenbauelement besteht aufgrund der fabrikseitigen Fertigung auch die Möglichkeit, dass das Deckenbauelement in Richtung der Längserstreckung der Tragwerkprofile eine gleichmäßige Krümmung aufweist, und zwar entgegen der späteren Belastungsrichtung. Dieses kann durch einen entsprechenden Aufbau des Schalungstisches erreicht werden, beispielsweise durch Verwendung einer sich über die Länge des zu erstellenden Bauelementes erstreckenden gekrümmten Stahlplatte. Erreicht werden soll hierdurch, dass beim Einbau eines solchen Deckenbauelementes in das zu erstellende Gebäude dieses durch sein Eigengewicht, wie dieses bei Fertigbaudecken der Fall ist, bestrebt ist durchzubiegen, jedoch aufgrund der Vorkrümmung in eine ebene Form gebracht wird. Insofern wird durch diese Maßnahme ein ansonsten zu beobachtendes Durchbiegen von Deckenbauelementen mit dem Ergebnis einer nicht ebenen Deckenoberseite vermieden.

Aufgrund der besonderen Eigenschaften dieses Porenbeton-Hybrid-Bauelementes kann dieses nicht nur als Wand- oder als Deckenbauelement ausgelegt werden. Vielmehr ist es auch möglich, andere Gebäudestrukturbauelemente zu erstellen, wie beispielsweise Treppen. Die Tragwerkprofile, die sich innerhalb eines solchen Treppenbauelementes befinden, sind gemäß einer Ausgestaltung paarweise mit ihren Rücken zueinander weisend angeordnet. Die Tragwerkprofilpaare eignen sich zum Anschließen von Treppenstufenstützprofilen, die mit ihrem einen Ende gegenüber den Tragwerkprofilschenkeln vorstehen und an diesem Ende ein typischerweise winklig ausgeführtes Treppenstufenkantenschutzprofil tragen. Dieses stellt einen wirksamen Schutz der Treppenkanten dar. Dieses kann in der Porenbetonschicht vergossen sein, und zwar mit geringem Abstand zu der Porenbetonoberfläche oder oberflächig frei liegen.

Nachfolgend ist die Erfindung anhand von Ausführungsbeispielen unter Bezugnahme auf die beigefügten Figuren beschrieben. Es zeigen:
- **Fig. 1:**: einen schematisierten Horizontalschnitt durch ein nicht erfindungsgemäßes Bauelement,
- **Fig. 2:**: eine Stirnseitenansicht eines Tragwerkprofils, das in dem Bauelement der Figur 1 eingesetzt ist,
- **Fig. 3:**: einen schematisierten Horizontalschnitt durch ein Bauelement gemäß einer erfindungsgemäßen Ausgestaltung,
- **Fig. 4:**: einen schematisierten Horizontalschnitt durch ein Bauelement gemäß einer weiteren erfindungsgemäßen Ausgestaltung,
- **Fig. 5:**: einen schematisierten Querschnitt durch ein Bauelement gemäß noch einer weiteren erfindungsgemäßen Ausgestaltung,
- **Fig. 6:**: eine schematisierte Draufsicht auf die obere horizontale Schmalseite eines weiteren, nicht erfindungsgemäßen Bauelements,
- **Fig. 7:**: einen schematisierten Vertikalschnitt durch ein weiteres, nicht erfindungsgemäßes Bauelement,
- **Fig. 8:**: eine perspektivische Ansicht eines Abschnittes noch eines weiteren Bauelementes, welches als Deckenbauelement ausgebildet ist und
- **Fig. 9:**: eine perspektivische Ansicht/Einsicht in ein weiteres, nicht erfindungsgemäßes Bauelement, ausgebildet als Treppenbauelement.

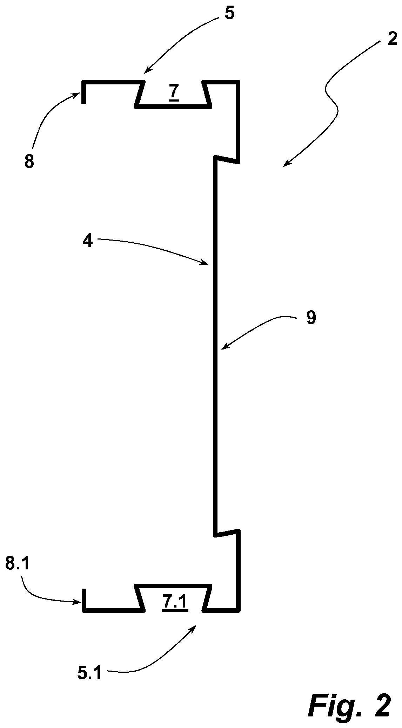

Ein als Wandbauelement vorgesehenes Bauelement 1, das nicht Gegenstand dieser Erfindung ist, ist bei dem dargestellten Ausführungsbeispiel aus mehreren mit Abstand zueinander angeordneten Tragwerkprofilen 2 aus Stahl aufgebaut. Diese weisen eine Wandstärke von mindestens 1 mm auf. Bei dem dargestellten Ausführungsbeispiel sind die Tragwerkprofile mit einem Abstand von nicht mehr als 600 mm voneinander beabstandet. Die Tragwerkprofile 2 sind in einer Porenleichtbetonschale 3 mit einer Rohdichte von 450 kg/m³ eingegossen. Die Tragwerkprofile 2 erstrecken sich durch die gesamte Länge des Bauelementes 1, die, da es sich bei dem Bauelement 1 um ein Wandbauelement handelt, der Höhe desselben entspricht. Die Tragwerkprofile 2, von denen in Figur 2 in einer Stirnseitenansicht ein Tragwerk 2 vergrößert gezeigt ist, weisen einen Steg 4 auf, von dem an jedem Ende ein Tragwerkschenkel 5, 5.1 abgekantet ist. Die Tragwerkschenkel 5, 5.1 sind in dieselbe Richtung abgekantet. Die Tragwerkschenkel 5, 5.1 verlaufen parallel oder quasi parallel zur Außenseite 6, 6.1 des Bauelementes 1. Die mit einem Winkel von 90° abgewinkelten Tragwerkschenkel 5, 5.1 sind durch Verklammerungselemente strukturiert. Hierbei handelt es sich um eine in jeden Tragwerkschenkel 5, 5.1 in Richtung zum anderen Tragwerkschenkel 5.1, 5.2 eingebrachte, sich über die gesamte Längserstreckung des Tragwerkprofils 2 erstreckende schwalbenschwanzförmige Verklammerungsnut 7, 7.1 sowie um eine endseitige zu dem jeweils anderen Tragwerkschenkel 5, 5.1 hin gerichtete Abkantung 8, 8.1. In den Steg 4 ist ebenfalls eine im Querschnitt schwalbenschwanzförmige Verklammerungsnut 9 eingebracht. Aufgrund dieser Verklammerungsstrukturen 7, 8, 7.1, 8.1, 9 sind bei diesem Ausführungsbeispiel die Tragwerkprofile 2 insgesamt in die Porenleichtbetonschale 3 eingegossen. Aufgrund dieses Verbundes ist das Bauelement 1 statisch gemeinsam durch die Tragwerkprofile 2 und die Porenleichtbetonschale 3 definiert.

Beide Elemente - Tragwerkprofile 2 und Porenleichtbetonschale 3 - übernehmen statische Funktionen.

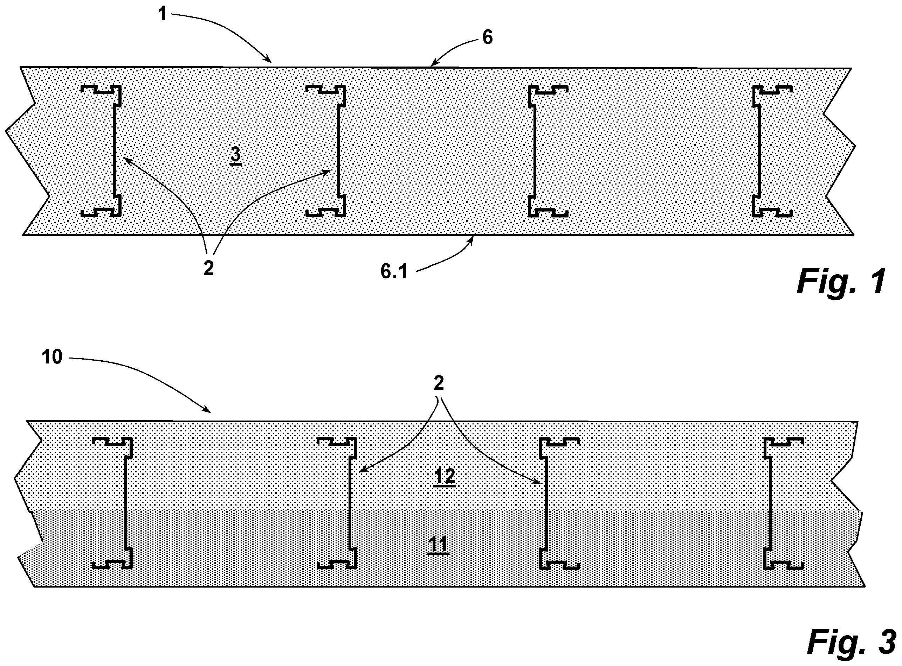

Figur 3 zeigt ein erfindungsgemäßes Bauelement 10, bei dem die Porenleichtbetonschicht, die bei dem Ausführungsbeispiel der Figur 1 aus der Porenleichtbetonschale 3 gebildet ist, aus zwei Porenleichtbetonschalen 11, 12 gebildet. In jeder Porenleichtbetonschale 11, 12 ist jeweils ein Tragwerkschenkel 5, 5.1 der Tragwerkprofile 2 eingegossen. Die Rohdichte der Porenleichtbetonschalen 11, 12 sind unterschiedlich, wobei bei dem dargestellten Ausführungsbeispiel die Porenleichtbetonschale 11 eine höhere Rohdichte aufweist als die Porenleichtbetonschale 12. Das Bauelement 10 ist als Wandbauelement vorgesehen. Somit ist die Statik des Bauelementes 10 durch die Tragwerkprofile 2 von vornehmlich der Porenbetonschale 11 definiert, während die Porenleichtbetonschale 12 mehr eine Wärmedämmungsfunktion übernimmt. Gleichwohl ist diese in geringerem Maße auch an der statischen Definition des Bauelementes 10 beteiligt. Bei diesem Ausführungsbeispiel beträgt die Rohdichte der Porenleichtbetonschale 11 etwa 600 kg/m³ und diejenige der Porenleichtbetonschale 12 350 kg/m³.

Zum Herstellen des Bauelementes 10 wird, nachdem die Tragwerkprofile 2 in die gewünschte Anordnung zueinander gebracht sind, zunächst die Porenleichtbetonschale 11 mit ihrer höheren Rohdichte in eine entsprechende Schalung gegossen. Die Porenleichtbetonschale 12 kann frisch auf frisch auf die Porenleichtbetonschale 11 gegossen werden. Aufgrund ihrer geringeren Rohdichte wird sich dies nicht mit dem noch nicht ausgehärteten Material der Porenleichtbetonschale 11 vermischen beziehungsweise in diese eindringen. Durch das gleichzeitige Abbinden der beiden Porenleichtbetonschalen 11, 12 ist die Anbindung der beiden Schalen 11, 12 besonders gut.

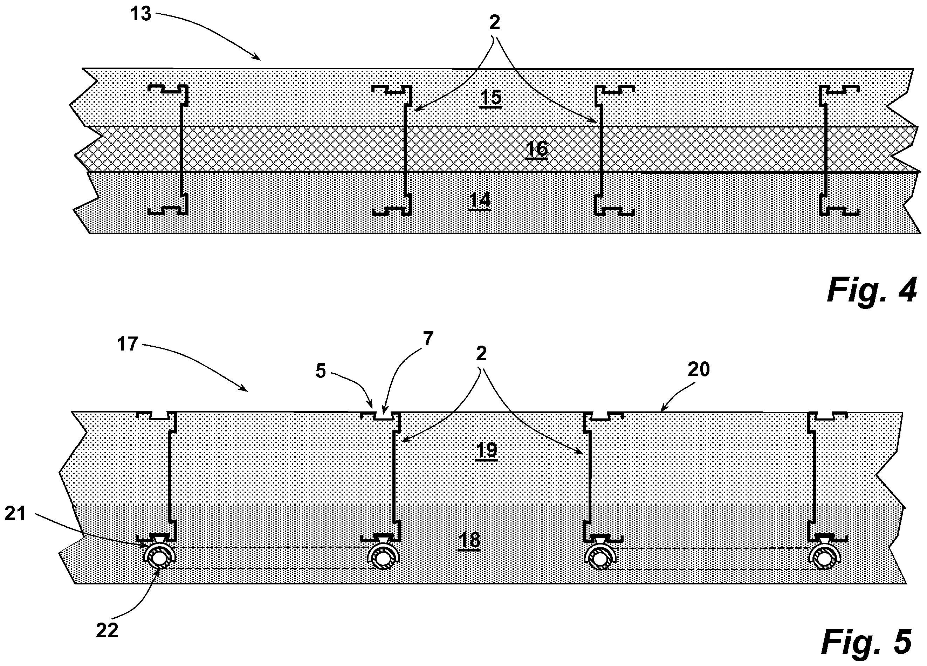

Figur 4 zeigt ein weiteres Bauelement 13, welches ebenso wie das Bauelement 10 zwei Porenleichtbetonschalen 14, 15 aufweist. Im Unterschied zu dem Bauelement 10 sind die beiden Porenleichtbetonschalen 14, 15 bei dem Bauelement 13 voneinander beabstandet. Zwischen die beiden Porenleichtbetonschalen 14, 15 ist bei diesem Ausführungsbeispiel eine Dämmstoffschicht 16 eingeschaltet. Die Rohdichten der Porenleichtbetonschalen 14, 15 entsprechen denjenigen der Porenleichtbetonschalen 11, 12, wobei die Porenleichtbetonschale 15 diejenige mit der geringeren Rohdichte ist.

Die Dämmstoffschicht 16 ist trittfest und somit hinreichend fest, dass nach Gießen der Porenleichtbetonschale 14 frisch auf frisch die Dämmstoffschicht 16 aufgebracht und anschließend unverzüglich die Porenleichtbetonschale 15 gegossen werden kann. Das Gießen der Porenleichtbetonschalen 14, 15 kann somit ebenso wie bei dem Ausführungsbeispiel der Figur 3 in einem Schritt und ohne notwendige Wartezeit, dass die zuerst gegossene Porenleichtbetonschale 14 ausgehärtet ist, erfolgen. Wie aus Figur 3 erkennbar, sind auch bei diesem Ausführungsbeispiel die Verklammerungsschenkel 5, 5.1 vollständig in jeweils einer Porenleichtbetonschale 14 bzw. 15 vergegossen.

Noch ein weiteres Ausführungsbeispiel eines Bauelementes 17 ist in Figur 5 gezeigt. Auch dieses Bauelement 17 weist zwei Porenleichtbetonschalen 18, 19 auf. Das Bauelement 17 ist als Deckenbauelement vorgesehen. Die Porenleichtbetonschale 18 weist eine höhere Rohdichte auf als die Porenleichtbetonschale 19, und zwar bei dem dargestellten Ausführungsbeispiel eine Rohdichte von etwa 850 kg/m³. Die Porenleichtbetonschale 19 weist eine Rohdichte von etwa 500 - 650 kg/m³ auf. Die Oberseite 20 des Bauelementes 17 bildet den Untergrund für einen darauf aufzubringenden Fußboden, beispielsweise einen Estrich. Aus diesem Grunde sind die Tragwerkschenkel 5 der am Aufbau dieses Bauelementes 17 eingesetzten Tragwerkprofile 2 mit ihrer Oberseite freiliegend. Aufgrund der dann ebenfalls freiliegenden Verklammerungsnuten 7 ist hierdurch eine besondere Verklammerungsmöglichkeit für einen auf die Oberseite 20 aufzutragenden Estrich (nicht dargestellt) geschaffen.

In einzelne Verklammerungsnuten 7.1 der anderen Tragwerkschenkel 5.1 der Tragwerkprofile 2 bzw. von einzelnen derselben des Deckenbauelementes 17 sind Halter 21 eingesetzt, mit denen Rohre 22 eines für eine Heizung dienenden Rohrleitungssystem gehalten sind. Wie aus der Schnittdarstellung der Figur 5 erkennbar, sind die Halter 21 mit den von diesen gehaltenen Rohren 22 in die Porenleichtbetonschale 18 eingegossen. Wie das Ausführungsbeispiel des Bauelementes 17 zeigt, können bei dem beschriebenen Konzept die in den Tragwerkschenkeln 5, 5.1 vorhandenen Verklammerungsnuten 7, 7.1 nicht nur einer Versteifung, sondern auch zusätzlichen Zwecken dienen, die bei diesem Ausführungsbeispiel Halterungszwecke sind. Bei diesem Deckenbauelement 17 stellt die Porenleichtbetonschale 18 die untere Schale dar, die bei einem Betrieb eines durch die Rohre 22 geführten Wärmefluids als Wärmestrahler dient. Die Rohdichte wird somit bei diesem Ausführungsbeispiel auch genutzt, damit dieser Schale eine Wärmestrahlerfunktion zukommen kann. In analoger Weise können die in der Porenleichtbetonschale 18 integrierten Rohe 22 des Rohrleitungssystems auch für eine Deckenkühlung eingesetzt werden. Es versteht sich, dass das vorbeschriebene Konzept der Integration von Rohren bzw. eines Rohrleitungssystems auch in beiden Porenleichtbetonschalen möglich ist, ebenso wie die Integration eines derartigen, in eine Porenleichtbetonschale eingegossenem Rohrleitungssystems im Zusammenhang mit der Realisierung einer Wandheizung.

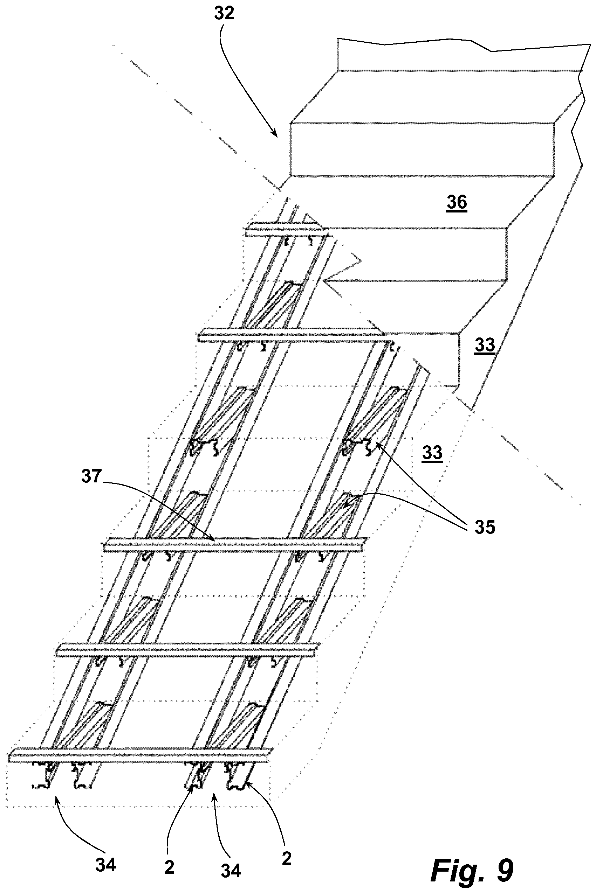

In nicht dargestellter Art und Weise ist das Bauelement 17 in Richtung der Längserstreckung der Tragwerkprofile (in Spannrichtung des Deckenbauelementes 17) etwas gekrümmt, und zwar um einen Betrag, der der Länge des Bauelementes 17 geteilt durch einen Faktor von 200 entspricht: L/200 [Längenmaßeinheit]. Durch diese Krümmung ist die Oberseite 20 des Bauelementes 17 leicht konvex gekrümmt. Hierdurch ist das Bauelement 17, welches als Deckenbauelement konzipiert ist, vorgekrümmt, und zwar in einem solchen Maße, dass ein sich beim Einbau desselben einstellendes Durchbiegen dazu führt, dass dann die Oberseite 20 eben ist. Eine perspektivische Darstellung eines weiteren solchen Bauelementes ist in Figur 9 beschrieben.

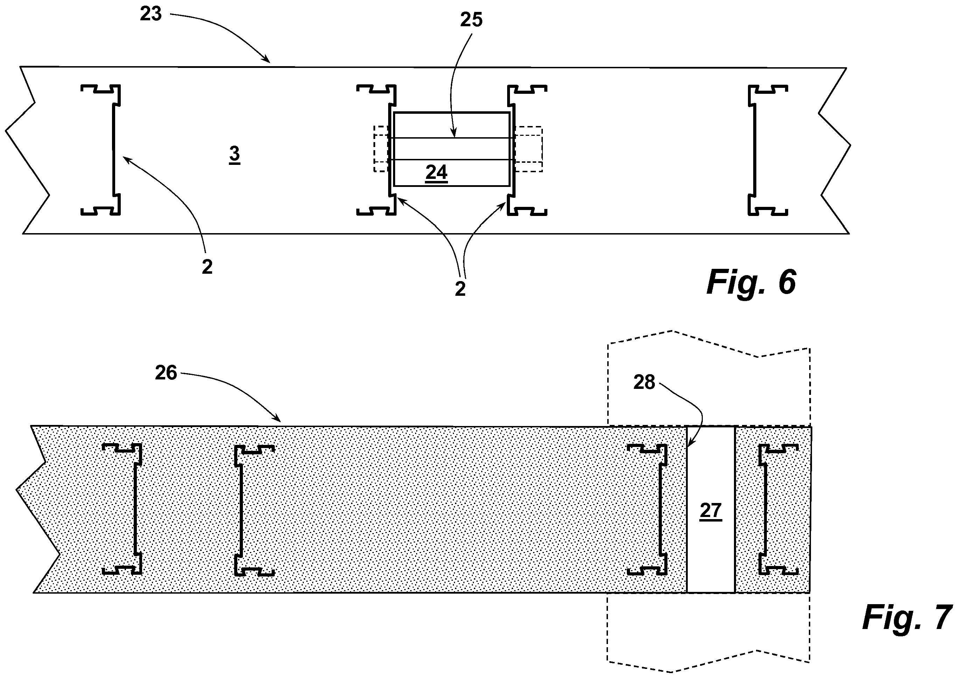

Figur 6 zeigt ein weiteres, nicht erfindungsgemäßes Bauelement 23. Dieses als Deckenbauelement ausgelegte Bauelement 23 ist prinzipiell aufgebaut, wie das Bauelement 1 der Figur 1. Daher sind gleiche Teile mit den gleichen Bezugszeichen kenntlich gemacht. Das Bauelement 23 unterscheidet sich von dem Bauelement 1 dadurch, dass zwei Tragwerkprofile 2 mit einem engeren Abstand zueinander angeordnet sind und zwischen diesen im Bereich ihrer Stegmitte eine Freilassung 24 vorgesehen ist. Die beiden mit ihren Rücken zueinander weisenden Tragwerkprofile 2 sind durch einen Bolzen 25 miteinander verbunden, wobei der Bolzen 25 sich durch die Freilassung 24 hindurch erstreckt. Der freiliegende Schaft des Bolzens 25 kann als Anschlusspunkt zum Anschließen eines Hebezeuges, beispielsweise einer Ringschlaufe dienen, um das Bauelement 23 mit einem Kran oder dergleichen anheben zu können. In der Figur 6 ist beispielhaft ein solcher Hebezeuganbindungspunkt dargestellt. Wenn das Bauelement 23 nur einen einzigen derartigen Hebezeuganbindungspunkt aufweist, befindet sich dieser mittig in Bezug auf seine Länge. In vielen Fällen wird man zwei mit entsprechendem Abstand zueinander angeordnete derartige Hebezeuganbindungspunkte vorsehen.

Figur 7 zeigt ein weiteres, nicht erfindungsgemäßes Bauelement 26. Das Bauelement 26 ist als Deckenbauelement ausgelegt und bei diesem Ausführungsbeispiel prinzipiell aufgebaut wie das Bauelement 1 der Figur 1. Das Bauelement 26 unterscheidet sich durch die Anordnung seiner Tragwerkprofile 2, die, wie aus dieser Figur erkennbar, mit ihren Rücken zueinander weisend paarweise zueinander angeordnet sind. Das Bauelement 26 ist konzipiert, damit dieses mit den angrenzenden Wänden (in dieser Figur gestrichelt gezeigt) verschraubt werden kann. Die Wände verfügen dann über einen Eingriff zum Zugänglichmachen des Bolzenkopfes sowie einer Spannschraube. Bei dieser Ausgestaltung sind die zueinander weisenden Seiten des Bauelementes 26 sowie der Schmalseiten der angrenzenden Wände durch ein Rahmenprofil geschützt, durch die auch ein Formschluss in Querrichtung zu der Höhe der Wände erzielt wird. Aus diesem Grunde ist zwischen die beiden Tragwerkprofile 2, die in der Figur am rechten Rand des Bauelementes 26 angeordnet sind, eine Durchbrechung 27 vorgesehen. Die Durchbrechung 27 wird durch einen Wellrohrabschnitt innerhalb der Schalung zum Gießen des Bauelementes 26 bereitgestellt. Der Wellrohreinsatz 28 ist Teil des Bauelementes 26. Durch diese vertikale Durchbrechung 27 durch das Bauelement 26 besteht die Möglichkeit, das Deckenbauelement 26 mit seinem Unterlager und/oder auch mit seinem Oberlager, beispielsweise einer Wand zu verschrauben. Eine solche Bauelementverbindung ist vor allem bei Bauwerken sinnvoll, die in Erdbeben gefährdeten Gebieten erstellt werden.

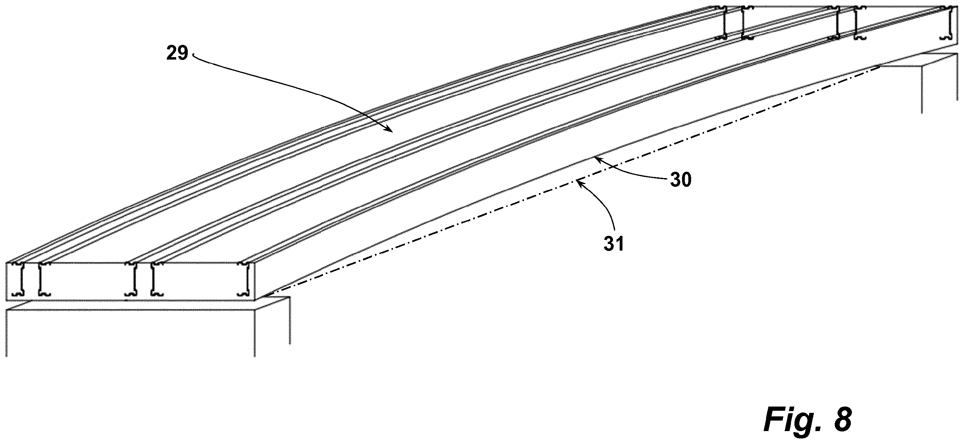

Figur 8 zeigt ein weiteres Bauelement 29, dass als Deckenbauelement konzipiert ist. In dieser Figur ist nur ein Abschnitt des Bauelementes 29 dargestellt. Dieses Bauelement 29 ist schematisierte auf einem Unterlager aufgelegt dargelegt und ist über seine Spannweite konvex gekrümmt, wobei Figur 8 das Bauelement 29 zeigt, bevor dieses von einem das Bauelement 29 tragenden Kran vollständig abgekoppelt ist. Der Abstand des unteren Scheitels 30 von einer seine Enden verbindenden gedachten Linie 31 entspricht dem Wert L/200, wobei L die Länge des Bauelementes 29 in Richtung seiner Spannweite ist.

Aufgrund des Hybrid-Charakters der vorbeschriebenen Porenbeton-Bauteile in Bezug auf ihre die Statik definierende Funktionalität eignet sich das vorbeschriebene Konzept einer Bauelementausgestaltung auch zur Ausbildung von anderen Bauelementen, wie beispielsweise Treppenbauelementen. Ein solches nicht erfindungsgemäßes Treppenbauelement 32 ist in Figur 9 gezeigt. Figur 9 zeigt das Bauelement 32 in einer Teilansicht (oberer Abschnitt) und in einer Teileinsicht (unterer Abschnitt). Aufgebaut ist das Bauelement 32 entsprechend dem bereits zu den vorbeschriebenen Bauelementen erläuterten Konzept der Integration von Tragwerkprofilen 2 in eine Porenleichtbetonschicht 33. Bei dem dargestellten Treppenbauelement 32 sind zwei Tragwerkprofilpaare 34 mit Abstand zueinander angeordnet. Jedes Tragwerkprofilpaar 34 ist von dem benachbarten seitlichen Abschluss des Bauelementes 32 beabstandet. Die beiden Tragwerkprofile 2 eines Tragwerkprofilpaares sind mit ihren Rücken zueinander weisend und mit Abstand zueinander angeordnet. Zwischen diesen sind Treppenstufenstützprofile 35 angeordnet, und zwar winklig zu der Längserstreckung der Tragwerkprofile 2. Diese dienen zur Unterstützung der auszubildenden Treppenstufen 36 und zum Tragen eines Treppenstufenkantenschutzprofils 37, dass sich an den freien Enden der Treppenstufenstützprofile 35 befindet. Die Treppenstufenkantenschutzprofile 37 weisen eine Breite auf, die in etwa der Breite des Treppenbauelementes 32 entspricht. Die Tragwerkprofilpaare 34 mit den von diesen gehaltenen Treppenstufenstützprofilen 35 sowie der Treppenstufenkantenschutzprofile 37 sind in eine entsprechend vorbereitete Schalung eingelegt, bevor der noch fließfähige Porenleichtbeton in eine die vorbeschriebenen Strukturelemente enthaltenden Schalung eingebracht wird. Nach Abbinden des Porenleichtbetons ist das Treppenbauelement 32 fertig gestellt.

Bei diesem Bauelement 32 wird die über die Treppenstufen 36 in das Bauelement 32 eingeleitete Kraft über die Treppenstufenstützprofile 35 in die Tragwerkprofile 2 und in den Porenleichtbeton 33 und über diesen in das das Treppenbauelement 32 tragende Unterlager eingeleitet. Bei diesem Ausführungsbeispiel wird der Hybrid-Charakter des Bauelementes 32 nochmals besonders deutlich.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung im Rahmen der geltenden Ansprüche umzusetzen, ohne dass diese im Rahmen dieser Ausführungen erläutert werden müssten.

**Bezugszeichenliste**

| | | | |
|---|---|---|---|
| 1 | Bauelement | 34 | Tragwerkprofilpaar |
| 2 | Tragwerkprofil | 35 | Treppenstufenstützprofil |
| 3 | Porenleichtbetonschale | 36 | Treppenstufe |
| 4 | Steg | 37 | Treppenstufenkantenschutzprofil |
| 5, 5.1 | Tragwerkschenkel | | |
| 6, 6.1 | Außenseite | | |
| 7, 7.1 | Verklammerungsnut | | |
| 8, 8.1 | Abkantung | | |
| 9 | Verklammerungsnut | | |
| 10 | Bauelement | | |
| 11 | Porenleichtbetonschale | | |
| 12 | Porenleichtbetonschale | | |
| 13 | Bauelement | | |
| 14 | Porenleichtbetonschale | | |
| 15 | Porenleichtbetonschale | | |
| 16 | Dämmstoffschicht | | |
| 17 | Bauelement | | |
| 18 | Porenleichtbetonschale | | |
| 19 | Porenleichtbetonschale | | |
| 20 | Oberseite | | |
| 21 | Halter | | |
| 22 | Rohr | | |
| 23 | Bauelement | | |
| 24 | Freilassung | | |
| 25 | Bolzen | | |
| 26 | Bauelement | | |
| 27 | Durchbrechung | | |
| 28 | Wellrohreinsatz | | |
| 29 | Bauelement | | |
| 30 | Scheitel | | |
| 31 | Linie | | |
| 32 | Treppenbauelement | | |
| 33 | Porenleichtbetonschicht | | |

## Patentansprüche

1. Porenbeton-Hybrid-Bauelement mit mehreren, darin integrierten, parallel und mit Abstand zueinander angeordneten Tragwerkprofilen (2), welche Tragwerkprofile (2) einen quer zur Ebene des Bauelementes (10, 13, 17, 23, 26, 29, 32) verlaufenden Steg (4) mit jeweils einem aus der Ebene des Steges (4) in dieselbe Richtung abgewinkelten und parallel oder annähernd parallel zu der benachbarten Außenfläche des Bauelementes (1, 10, 13, 17, 23, 26, 29, 32) verlaufenden Tragwerkschenkel (5, 5.1) aufweisen, wobei die Tragwerkschenkel (5, 5.1) der Tragwerkprofile (2) in eine über die Erstreckung der Tragwerkschenkel (5, 5.1) in ihrer Nebeneinanderanordnung sich erstreckende Porenbetonschicht (3, 11, 12, 14, 15, 18, 19) eingegossen sind, **dadurch gekennzeichnet, dass** die Porenbetonschicht aus zumindest zwei Porenbetonschalen (11, 12, 14, 15, 18, 19) gebildet ist und jeder Tragwerkschenkel (5, 5.1) in eine eigene der Porenbetonschalen (11, 12, 14, 15, 18, 19) eingeschlossen ist und dass wobei die Rohdichte der beiden Porenbetonschalen (11, 12, 14, 15, 18, 19) unterschiedlich ist und beide Porenbetonschalen (11, 12, 14, 15, 18, 19) einen Anteil an der statischen Lastaufnahmefunktionalität übernehmen, wobei die Porenbetonschale (11, 14, 18) mit höherer Rohdichte einen größeren Anteil der statischen Lastaufnahmefunktionalität übernimmt und der Porenbetonschale (12, 15, 19) mit geringerer Rohdichte vornehmlich eine Dämmfunktionalität zukommt.

2. Bauelement nach Anspruch 1, **dadurch gekennzeichnet, dass** die Tragwerkschenkel (5, 5.1) in Richtung der Längserstreckung des Tragwerkprofils (2) wenigstens eine in Richtung zum anderen Tragwerkschenkel (5, 5.1) vertiefte Verklammerungsnut (7, 7.1) aufweisen.

3. Bauelement nach Anspruch 2, **dadurch gekennzeichnet, dass** die wenigstens eine Verklammerungsnut (7, 7.1) beidseitig hinterschnitten ist.

4. Bauelement nach einem der Ansprüche 1 bis 3, **dadurch gekennzeichnet, dass** der Steg (4) zumindest eine in Längserstreckung des Tragwerkprofils (2) folgende Verklammerungsnut (9) aufweist.

5. Bauelement nach Anspruch 4, **dadurch gekennzeichnet, dass** die Verklammerungsnut (9) des Steges (4) in Richtung der abgekanteten Tragwerkschenkel (5, 5.1) in den Steg (4) eingebracht ist.

6. Bauelement nach einem der Ansprüche 1 bis 5, **dadurch gekennzeichnet, dass** der Steg und/oder die Tragwerkschenkel quer zur Längserstreckung des Tragwerkprofils wirkende Verklammerungsstrukturen tragen.

7. Bauelement nach einem der Ansprüche 1 bis 6, **dadurch gekennzeichnet, dass** die beiden Porenbetonschalen (14, 15) voneinander beabstandet sind.

8. Bauelement nach einem der Ansprüche 1 bis 6, **dadurch gekennzeichnet, dass** zwischen den beiden Porenbetonschalen (14, 15) eine insbesondere trittfeste Dämmmaterialschicht (16) angeordnet ist.

9. Bauelement nach einem der Ansprüche 1 bis 8, **dadurch gekennzeichnet, dass** die Rohdichte der einen Porenbetonschale 30 - 50 % größer ist als diejenige der anderen Porenbetonschale.

10. Bauelement nach einem der Ansprüche 1 bis 7, **dadurch gekennzeichnet, dass** das Bauelement (23) zumindest zwei mit ihren Rücken zueinander weisende und mit geringerem Abstand als zu den benachbarten Tragwerkprofilen (2) voneinander beabstandete Tragwerkprofile (2) aufweist, wobei in einem randnahen Endabschnitt zumindest eines Endbereichs die Stege dieser beiden Tragwerkprofile (2) durch einen eine Freilassung (24) querendenden Bolzen (25) miteinander verbunden sind.

11. Bauelement nach Anspruch 2, **dadurch gekennzeichnet, dass** in zumindest einigen der Verklammerungsnuten (7.1) Halter (21), beispielsweise Rohrhalter, festgelegt sind.

12. Bauelement nach einem der Ansprüche 1 bis 11, **dadurch gekennzeichnet, dass** das Bauelement (17, 29) in Richtung der Längserstreckung der Tragwerkprofile (2) gleichmäßig gekrümmt ist.

13. Bauelement nach Anspruch 12, **dadurch gekennzeichnet, dass** der Abstand des unteren Scheitels des gekrümmten Bauelementes (17) von einer seiner Enden verbindenden gedachten Linie dem Wert L/200 entspricht, wobei L die Länge des Bauelementes (17) in Richtung der Längserstreckung der Tragwerkprofile (2) ist.

## Claims

1. Aerated concrete hybrid construction element comprising multiple integrated support structure profiles (2) that are parallel and mutually spaced, said support structure profiles (2) comprising a rib (4) running transversely to the plane of the construction element (10, 13, 17, 23, 26, 29, 32), each rib having support structure limbs (5, 5.1) angled in the same direction away from the plane of the rib (4) and running parallel, or approximately parallel, to the adjacent outer surface of the construction element (1, 10, 13, 17, 23, 26, 29, 32), wherein the support structure limbs (5, 5.1) of the support structure profiles (2) are embedded into an aerated concrete layer (3, 11, 12, 14, 15, 18, 19) extending over the extent of the support structure limbs (5, 5.1) in their neighbouring arrangement, **characterised in that** the aerated concrete layer is formed from at least two aerated concrete shells (11, 12, 14, 15, 18, 19) and each support structure limb (5, 5.1) is enclosed into its own aerated concrete shell (11, 12, 14, 15, 18, 19), and wherein the bulk density of the two aerated concrete shells (11, 12, 14, 15, 18, 19) is different, and both aerated concrete shells (11, 12, 14, 15, 18, 19) take over a portion of the static load assumption function, wherein the aerated concrete shell (11, 14, 18) with higher bulk density takes over a greater portion of the static load assumption function, and the aerated concrete shell (12, 15, 19) with lower bulk density is assigned a primarily insulating function.

2. Construction element according to claim 1, **characterised in that** the support structure limbs (5, 5.1) comprise, in the direction of the longitudinal extension of the support structure profile (2), at least one clamping groove (7, 7.1), indented in the direction towards the other support structure limb (5, 5.1).

3. Construction element according to claim 2, **characterised in that** the at least one clamping groove (7, 7.1) is undercut on both sides.

4. Construction element according to any one of claims 1 to 3, **characterised in that** the rib (4) comprises at least one clamping groove (9) following in the longitudinal extension of the support structure profile (2).

5. Construction element according to claim 4, **characterised in that** the clamping groove (9) of the rib (4) is introduced into the rib (4) in the direction of the angled support structure limb (5, 5.1).

6. Construction element according to any one of claims 1 to 5, **characterised in that** the rib and/or the support structure limb carry clamping structures which take effect transverse to the longitudinal extension of the support structure profile.

7. Construction element according to any one of claims 1 to 6, **characterised in that** the two aerated concrete shells (14, 15) are arranged at a distance from one another.

8. Construction element according to any one of claims 1 to 6, **characterised in that** a particularly impact-resistant insulating material layer (16) is arranged between the two aerated concrete shells (14, 15).

9. Construction element according to any one of claims 1 to 8, **characterised in that** the bulk density of the one aerated concrete shell is 30 - 50% greater than that of the other aerated concrete shell.

10. Construction element according to any one of claims 1 to 7, **characterised in that** the construction element (23) comprises at least two support structure profiles (2) with their backs facing one another and spaced at a shorter distance apart from one another than from the adjacent support structure profiles (2), wherein, in an end section close to the edge of at least one end region, the ribs of these two support structure profiles (2) are connected to one another by bolts (25) which traverse a space left free (24).

11. Construction element according to claim 2, **characterised in that** holding elements (21), such as pipe holders, are secured in at least some of the clamping grooves (7.1).

12. Construction element according to any one of claims 1 to 11, **characterised in that** the construction element (17, 29) is cambered uniformly in the direction of the longitudinal extension of the support structure profiles (2).

13. Construction element according to claim 12, **characterised in that** the spacing interval of the lower summit of the cambered construction element (17) from an imaginary line connecting its ends corresponds to the value L/200, wherein L is the length of the construction element (17) in the direction of the longitudinal extension of the support structure profiles (2).

## Revendications

1. Élément de construction hybride en béton poreux comportant, intégrés dans celui-ci, plusieurs profilés de structure porteuse (2) parallèles et disposés à distance les uns des autres, lesquels profilés de structure porteuse (2) présentent une traverse (4) s'étendant perpendiculairement au plan de l'élément de construction (10, 13, 17, 23, 26, 29, 32) comportant respectivement un montant d'ossature porteuse (5, 5.1) qui s'étend parallèlement ou approximativement parallèlement à la surface extérieure voisine de l'élément de construction (1, 10, 13, 17, 23, 26, 29, 32) et qui est chanfreiné à partir du plan de la traverse (4), dans la même direction, les montants d'ossature porteuse (5, 5.1) des profilés de structure porteuse (2) étant coulés dans une couche de béton poreux (3, 11, 12, 14, 15, 18, 19) s'étendant sur l'étendue des montants d'ossature porteuse (5, 5.1) dans leur disposition les uns à côté des autres, **caractérisé en ce que** la couche de béton poreux est constituée d'au moins deux coques en béton poreux (11, 12, 14, 15, 18, 19) et chaque montant d'ossature porteuse (5, 5.1) est inclus respectivement dans l'une des coques en béton poreux (11, 12, 14, 15, 18, 19) et **en ce que** la masse volumique apparente des deux coques en béton poreux (11, 12, 14, 15, 18, 19) est différente et les deux coques en béton poreux (11, 12, 14, 15, 18, 19) prennent en charge une part de la fonctionnalité statique d'absorption des charges, la coque en béton poreux (11, 14, 18) à masse volumique apparente plus élevée prenant en charge une part plus grande de la fonctionnalité statique d'absorption des charges et la coque en béton poreux (12, 15, 19) à la masse volumique apparente moins élevée assurant essentiellement une fonctionnalité d'isolation.

2. Élément de construction selon la revendication 1, **caractérisé en ce que** les montants d'ossature porteuse (5, 5.1) présentent dans le sens de l'étendue longitudinale du profilé d'ossature porteuse (2) au moins une rainure de cramponnage (7, 7.1) plus profonde en direction de l'autre montant d'ossature porteuse (5, 5.1).

3. Élément de construction selon la revendication 2, **caractérisé en ce que** l'au moins une rainure de cramponnage (7, 7.1) est contre-découpée des deux côtés.

4. Élément de construction selon l'une des revendications 1 à 3, **caractérisé en ce que** la traverse (4) présente au moins une rainure de cramponnage (9) suivant l'étendue longitudinale du profilé d'ossature porteuse (2).

5. Élément de construction selon la revendication 4, **caractérisé en ce que** la rainure de cramponnage (9) de la traverse (4) est aménagée dans la traverse (4) dans le sens du montant d'ossature porteuse (5, 5.1) chanfreiné.

6. Élément de construction selon l'une des revendications 1 à 5, **caractérisé en ce que** la traverse et/ou les montants d'ossature porteuse supportent des structures de cramponnage agissant perpendiculairement à l'étendue longitudinale du profilé d'ossature porteuse.

7. Élément de construction selon l'une des revendications 1 à 6, **caractérisé en ce que** les deux coques en béton poreux (14, 15) sont à distance l'une de l'autre.

8. Élément de construction selon l'une des revendications 1 à 6, **caractérisé en ce qu'**une couche de matériau isolant (16) résistant notamment au piétinement est placée entre les deux coques en béton poreux (14, 15).

9. Élément de construction selon l'une des revendications 1 à 8, **caractérisé en ce que** la masse volumique apparente de l'une des coques en béton poreux est de 30 à 50 % plus élevée que celle de l'autre coque en béton poreux.

10. Élément de construction selon l'une des revendications 1 à 7, **caractérisé en ce que** l'élément de construction (23) présente au moins deux profilés d'ossature porteuse (2) orientés l'un vers l'autre par leur dos et espacés l'un de l'autre, en laissant un intervalle plus faible qu'entre les profilés d'ossature porteuse (2) voisins, les traverses de ces deux profilés d'ossature porteuse (2) sont raccordées l'une à l'autre au niveau d'un tronçon d'extrémité proche du bord, d'au moins une zone d'extrémité, par un boulon (25) traversant une réservation (24).

11. Élément de construction selon la revendication 2, **caractérisé en ce que** dans au moins certaines des rainures de cramponnage (7.1) sont fixés des éléments de maintien (21), par exemple des supports de tuyau.

12. Élément de construction selon l'une des revendications 1 à 11, **caractérisé en ce que** l'élément de construction (17, 29) est courbé de manière homogène dans le sens de l'étendue longitudinale des profilés d'ossature porteuse (2).

13. Élément de construction selon la revendication 12, **caractérisé en ce que** l'intervalle de la crête inférieure de l'élément de construction (17) courbé correspond, par rapport à une ligne imaginaire reliant ses extrémités, à la valeur de L/200, L étant la longueur de l'élément de construction (17) dans le sens de l'étendue longitudinale des profilés d'ossature porteuse (2).
